# EUROPÄISCHE PATENTSCHRIFT

(11) **EP 1 484 605 B1**
(45) Veröffentlichungstag und Bekanntmachung des Hinweises auf die Patenterteilung: **20.01.2010**
(21) Anmeldenummer: 04011853.1
(22) Anmeldetag: 19.05.2004
(51) Int. Cl.: G01N 27/414

(54) **FET-sensor und Verfahren zum Ansteuern eines solchen FET-sensors**
FET-sensor and method for driving such a sensor
Capteur à effet de champ muni et méthode de commande de ce capteur

(30) Priorität: 06.06.2003 DE 10325718
(43) Veröffentlichungstag der Anmeldung: 08.12.2004
(73) Patentinhaber: Micronas GmbH, 79108 Freiburg i. Br. (DE)
(72) Erfinder: Frerichs, Heinz-Peter, 79271 St. Peter (DE)
(74) Vertreter: Göhring, Robert

(56) Entgegenhaltungen:
- DE-A1- 10 118 366
- DE-A1- 10 118 367
- DE-A1- 10 151 020
- US-A1- 4 198 851
- US-A1- 4 437 969
- KÖNIG R.: "Zur Beschränkung des Anspruchsinhalts durch 'bar'-Derivate" MITTEILUNGEN DER DEUTSCHEN PATENTANWÄLTE, vol. 88, 1997, pages 62-72, XP001248632

## Beschreibung

Die vorliegende Erfindung betrifft einen Halbleitersensor mit einem Feldeffekttransistor gemäß den Merkmalen des Oberbegriffs des Anspruchs 1 oder 14 sowie ein Verfahren zum Ansteuern eines solchen Halbleitersensors.

Solche Halbleitersensoren sind hinlänglich bekannt. So beschreibt beispielsweise die US 5,911,873 die Anbindung von Feldeffekttransistoren, um eine Ionenkonzentration in Flüssigkeiten und Gasen zu messen. Die US 4,411,741 beschreibt die Bestimmung der Gaskonzentration durch Messung von Austrittsarbeitsdifferenzen auf gassensitiven Schichten. In US 4 437 969 wird ein chemosensitiver FET mit einer regelbaren Spannungsquelle betrieben.

Des Weiteren beschreibt DE 31 23 403 A1 einen Halbleitersensor, der mittels einer Ansteuereinrichtung von einer Messphase in eine Ruhephase schaltbar ist. Aus DE 10 118 367 ist ein gattungsgemäßer Halbleitersensor mit einem außerhalb des Kanalbereichs angeordneten Guardring bekannt.

Darüber hinaus sind heute Sensoren bekannt, bei denen in einem Halbleitersubstrat durch Gegendotierung jeweils ein Drainanschluss und eine Sourceinsel erzeugt werden und eine isolierende Schicht auf dem Substrat zwischen dem Sourceanschluss und dem Drainanschluss gewachsen oder deponiert wird. Diese Sensoren werden auch Transducer genannt. Je nach Anwendung wird auf diese isolierende Schicht zwischen dem Sourceanschluss und dem Drainanschluss die ionensensitive Schicht aufgebracht oder eine gassensitive Schicht in einem bestimmten Abstand angeordnet. Letztere werden als sogenannte "suspended Gate FET" bzw. "SGFET" bezeichnet.

Eine weitere Anwendung bei Halbleitersensoren mit Feldeffekttransistoren sieht eine Elektrode auf dem Isolator vor, die kapazitiv durch ein in einem bestimmten Abstand angebrachtes gassensitives Gate gesteuert wird und die an das Gate eines Lesetransistors angeschlossen ist. Bei den eingesetzten Feldeffekttransistoren handelt es sich um sogenannte kapazitiv kontrollierte Feldeffekttransistoren(=CC-FET). Beschrieben sind solche CC-FET beispielsweise in DE 43 33 875 C2, wobei auch hier das sensitive Gate von einem Guardring umgeben ist.

Bei all diesen bekannten Halbleitersensoren mit Feldeffekttransistoren wird die durch das nachzuweisende Ion Gasverursachte Ladungs-/ Austrittsarbeitsänderung durch eine Drain-Source-Stromänderung am Feldeffekttransistor, der den Lesetransistor bildet, detektiert. Bei dem SGFET und CC-FET hat man unter anderem den Vorteil, dass man Transducer und sensible Schicht unabhängig voneinander prozessieren kann.

Schließlich sind auch CC-FET-Ausführungen bekannt, in der unter der floatenden Elektrode eine Kontrollelektrode angebracht ist, um die floatende Elektrodekapazität zu beeinflussen und evtl. einen Arbeitspunkt einzustellen und herstellungsbedingte Schwankungen der Einsatzkennlinie des Feldeffekttransistors zu kompensieren.

Nachteilig bei diesen Anordnungen ist, dass in der letzt genannten Ausführung das Potenzial der floatenden Elektrode ungewollt kapazitiv angehoben wird. Es ist immer der Fall, dass diese durch nicht zu kontrollierende Oberflächenleitungen wieder auf das Potenzial der Umgebung, welches in der Regel durch einen Guardring definiert wird, zurückgeführt wird, und damit der Feldeffekttransistor auf seinem Arbeitspunkt wegdriftet. Auch in anderen genannten Ausführungen ist ein großer Anteil der Drift bedingt durch Anlagen von Potenzialen an den Sourceanschluss, den Drainanschluss und das Substrat, die sich kapazitiv über das Gate des Lesetransistors auf die Sensorelektrode übertragen.

Der vorliegenden Erfindung liegt die Aufgabe zu Grunde, einen Halbleitersensor anzugeben, bei dem das Problem der Arbeitspunktdefinition und der Drift besonders beim Einschalten des Halbleitersensors gelöst ist. Des weiteren soll ein Verfahren zum Ansteuern eines solchen Halbleitersensors angegeben werden.

Diese Aufgabe wird durch einen Halbleitersensor mit den Merkmalen des Anspruchs 1 oder 14 gelöst.

Ein Verfahren zum Ansteuern solcher Halbleitersensoren ist Gegenstand des Anspruchs 17.

Weiterbildungen der Erfindung sind Gegenstand der Unteransprüche.

Der erfindungsgemäße Halbleitersensor sieht eine Ansteuereinrichtung vor, die eingerichtet ist zur wiederholten Schaltung des Halbleitersensors aus seiner eigentlichen Messphase in eine Ruhephase schaltbar ist, innerhalb der alle Anschlüsse des Feldeffekttransistors auf gleiches Potenzial gelegt sind, wobei in der Ruhephase eine ausreichend große Spannung an einen Steueranschluss der Ansteuereinrichtung (50) angelegt ist.

Erfindungsgemäß wird also dafür gesorgt, dass alle Anschlüsse des Feldeffekttransistors außerhalb der Messphase, d. h. während einer Ruhephase oder im ausgeschalteten Zustand, auf gleiches Potenzial geschaltet sind. Vorteilhafterweise wird als vorgegebenes, gleiches Potenzial das Massepotenzial des Sensors vorgegeben. Dies kann entweder über direkte Leitungen oder über Dioden erfolgen. Insbesondere werden die Drain-, Source-, und Guardringanschlüsse sowie das Substrat und die Sensorelektrode während der Ruhephase auf das gleiche Potenzial gelegt.

Während einer Messphase werden während einer hinreichend kurzen Zeit an das Substrat, den Sourceanschluss und den Drainanschluss des Feldeffekttransistors diejenigen Potenziale angelegt, deren Werte für einen definierten Arbeitspunkt des Transistors notwendig sind. Anschließend werden in einer Ruhephase wieder alle Potenziale auf Masse gelegt.

In einer besonders bevorzugten Ausführungsform der Erfindung ist die Sensorelektrode des Halbleitersensors an zwei Feldeffekttransistoren gegensätzlicher Dotierungsverhältnisse angeschlossen. In der Ruhephase sind wieder alle Potenziale über die Schalteinrichtung auf Masse geschaltet. Die Messphase wird bei dieser Ausführungsvariante in zwei Teilmessphasen unterteilt, wobei in der ersten Teilmessphase die Potenziale wie oben beschrieben an den einen Feldeffekttransistor angelegt und in der zweiten Teilmessphase die gleiche Potenziale mit umgekehrten Vorzeichen an den anderen Feldeffekttransistor angelegt werden.

Diese letzt genannte Ausführungsform hat den Vorteil, dass die Summe der angelegten Potenziale über die Zeit integriert gleich oder annähernd Null ist und so eine Drift des Halbleitersensors vermieden werden kann.

Nachfolgend wird die Erfindung anhand von Ausführungsbeispielen näher erläutert. Es zeigen:
- Figur 1: das Ersatzschaltbild eines CC-FET nach dem Stand der Technik,
- Figur 2: den in Figur 1 dargestellten CC-FET mit einer angeschlossenen Schalteinrichtung, die es erlaubt, den CC-FET während Ruhephasen auf ein vorgegebenes Potenzial zu schalten, und
- Figur 3: ein weiteres Ausführungsbeispiel eines Halbleitersensors nach der Erfindung, jedoch mit zwei Feldeffekttransistoren gegensätzlicher Dotierung.

In den nachfolgenden Figuren bezeichnen, sofern nicht anders angegeben, gleiche Bezugszeichen Teile mit gleicher Bedeutung. Dabei ist anzumerken, dass zwar in den dargestellten Ausführungsbeispielen der Figuren Feldeffekttransistoren mit konkreter Dotierung, also p-Kanal- oder n-Kanal-Feldeffekttransistoren angegeben sind. Diese Beispiele sind jedoch nicht einschränkend zu verstehen. Es liegt vielmehr auch im Rahmen vorliegender Erfindung, Feldeffekttransistoren mit entgegengesetzter Polarität einzusetzen. Zu beachten ist hierbei lediglich, dass Potenziale und Anschlüsse des FET dann ebenfalls umgekehrt werden müssen.

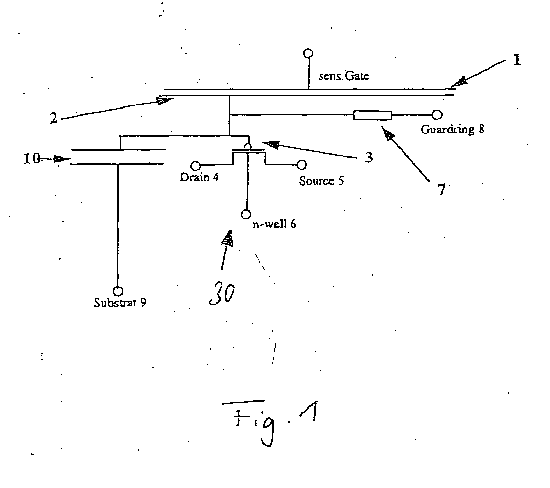

In Figur 1 ist das Ersatzschaltbild eines kapazitiv gesteuerten Feldeffekttransistors 30, eines sogenannten CC-FET, dargestellt. Dieser Feldeffekttransistor 30 verfügt über ein sogenanntes Suspended Sensitive Gate, welches mit dem Bezugszeichen 1 bezeichnet ist. Auf Abstand zu diesem Sensitive Gate 1 befindet sich eine Gegenelektrode 2, die an den Gateanschluss 3 eines Feldeffekttransistors 30 angeschlossen ist. Dieser Feldeffekttransistor 30 ist ein p-Kanal-Feldeffekttransistor und verfügt über einen Drainanschluss 4, einen Sourceanschluss 5 sowie einen Substratanschluss 6, der vorliegend ein sogenannter Substrat n-well-Anschluss ist. Ein an sich bekannter Guardring 8 ist über einen Oberflächenwiderstand 7 mit der Gegenelektrode 2 und dem Gateanschluss 3 des Feldeffekttransistors 30 fest verbunden. Das Substrat 9 bildet unter der Gegenelektrode 2 die im Ersatzschaltbild dargestellte Kapazität 10 aus.

Im Betrieb dieses in Figur 1 dargestellten Halbleitersensors sind die einzelnen Anschlüsse auf verschiedene vorgegebene Potenziale gelegt. Dabei sind die Potenziale am Drainanschluss 4, am Sourceanschluss 5 und am Substratanschluss n-well 6 so abgestimmt, dass sich ein optimaler Arbeitspunkt des Feldeffektstransistors 30 einstellt. Die Werte der genannten Potenziale sind durch den gewünschten Strom durch den Feldeffekttransistor 30 bestimmt. Bei der Ionenkonzentrationsmessung bzw. Gaskonzentrationsmessung mit einem solchen Halbleitersensor wird die durch das nachzuweisende Ion bzw. Gas verursachte Ladung- bzw. Austrittsarbeitsänderung durch eine Drain-Source-Stromänderung am Feldeffekttransistor 30 detektiert.

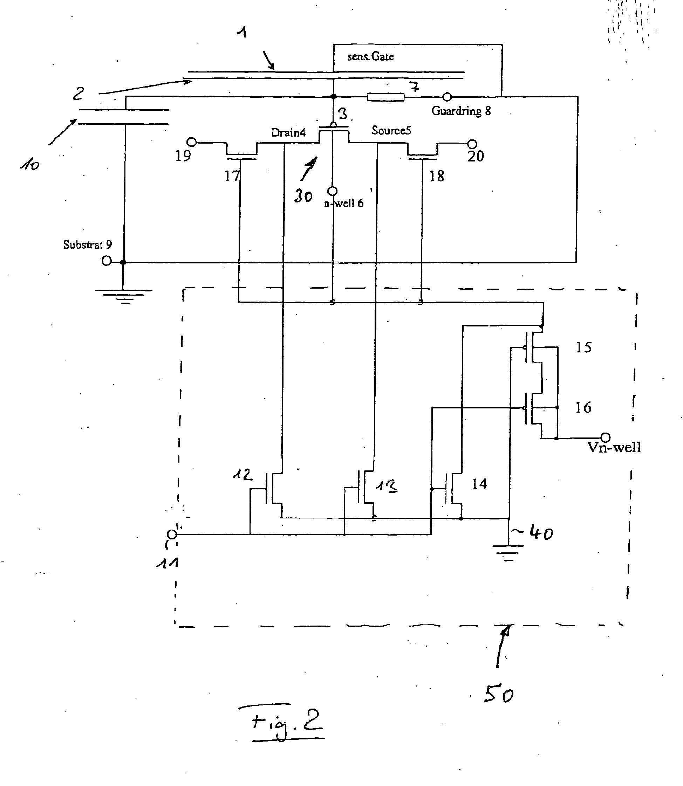

Um zu vermeiden, dass der Halbleitersensor und der darin monolithisch integrierte Feldeffekttransistor aus seinem gewünschten Arbeitspunkt wegdriftet, wird mittels einer im Zusammenhang mit Figur 2 beispielhaft erläuterten Ansteuereinrichtung dafür gesorgt, dass der Halbleitersensor außerhalb seiner Messzeiten, also in Ruhephasen oder im abgeschalteten Zustand, auf ein definiertes Potenzial gelegt wird.

Hierzu ist in Figur 2 eine mit dem Bezugszeichen 50 angedeutete Ansteuereinrichtung 50 dargestellt, durch welche die Anschlüsse des Feldeffekttransistors 30 des Halbleitersensors auf ein gleiches, vorgegebenes Potenzial, vorzugsweise Massepotenzial 40, angeschlossen werden.

Der in Figur 1 dargestellt Halbleitersensor ist gemäß Figur 2 folgendermaßen erweitert.

Der Drainanschluss 4 des Feldeffekttransistors 30 ist über die Laststrecke eines weiteren Feldeffekttransistors 12 an Massepotenzial 40 gelegt. Der Sourceanschluss 5 des Feldeffekttransistors 30 ist ebenfalls über eine Laststrecke eines Feldeffekttransistors 13 an Massepotenzial 40 geschaltet. Schließlich ist auch der Substratanschluss 6 über die Laststrecke eines weiteren Feldeffekttransistors 14 an Bezugspotenzial bzw. Massepotenzial 40 gelegt. Die jeweiligen Steueranschlüsse dieser Feldeffekttransistoren 12, 13 und 14 sind miteinander in Verbindung und an einen Steueranschluss 11 angeschlossen, an den ein noch zu erläuterndes Steuersignal anzulegen ist, um den Halbleitersensor erfindungsgemäß anzusteuern. Dieser Steueranschluss 11 ist darüber hinaus noch mit dem Gateanschluss eines p-Kanal-Feldeffekttransistors 16 in Verbindung. Die Laststrecke dieses Feldeffekttransistors 16 ist in Reihe zu einem weiteren p-Kanal-Feldeffekttransistor 15 geschaltet. Die Laststrecken beider Feldeffekttransistoren 15 und 16 sind zwischen den Substratanschluss 6 und eine Klemme gelegt, an die ein Potenzial Vn-well anzulegen ist. Die Substratanschlüsse beider p-Kanal-Transistoren 15 und 16 sind ebenfalls an die letztgenannte Klemme angeschlossen. Der Gateanschluss des p-Kanal-Feldeffekttransistors 15 ist mit Massepotenzial 40 in Verbindung. Schließlich ist zwischen dem Anschluss 19, an den das Arbeitspotenzial für den Drainanschluss 4 des Feldeffekttransistors 30 anzulegen ist, und den Drainanschluss 4 des Feldeffekttransistors 30 ein Entkopplungstransistor 17 mit seiner Laststrecke geschaltet. Der Gate-Anschluss dieses Entkopplungstransistors 17 ist mit dem Substratanschluss 6 in Verbindung. In ähnlicher Weise ist ein weiterer Entkopplungstransistor 18 mit seiner Laststrecke zwischen den Sourceanschluss 5 des Feldeffekttransistors 30 und den Anschluss 20, an den das Arbeitspotenzial für den Feldeffekttransistor 30 anzulegen ist, geschaltet. Der Steuer- bzw. Gateanschluss dieses Entkopplungstransistors 18 ist mit dem Substratanschluss 6 ebenfalls in Kontakt.

In Figur 2 ist der Anschluss des sensitiven Gates 1 mit dem Guardring 8 an das Substrat 9 angeschlossen und damit an das Potenzial, an welches, wie nachfolgend erläutert wird, auch der Drainanschluss 4, der Sourceanschluss 5 und der Substratanschluss n-well 6 des FET 30 in den Ruhephasen geschaltet wird.

Die Funktionsweise des in Figur 2 dargestellten Halbleitersensors samt Ansteuerschaltung ist wie folgt:

Im ausgeschalteten Zustand des Halbleitersensors sind alle Knoten entweder über Verdrahtung oder Dioden auf ein Potenzial, im vorliegenden Ausführungsbeispiel das Potenzial des Substrates 9, gelegt. Beim Einschalten des Halbleitersensors werden bestimmte Knoten des FET 30, also dessen Drainanschluss 4, Sourceanschluss 5 und Substratanschluss n-well 6 durch Anlegen einer Spannung an den Steueranschluss 11 über die Transistoren 12, 13, 14, 15 und 16 aktiv auf Massepotenzial 40 gezogen. Die Entkopplungstransistoren 17 und 18 sorgen dafür, dass darüber hinaus die Anschlüsse 19 und 20 von den Drainanschlüssen 4 und Sourceanschlüssen 5 des Feldeffekttransistors 30 getrennt werden. Die Knoten befinden sich deshalb auf einem definierten, vorgegebenen Potenzial, hier dem Massepotenzial 40.

Um den Messvorgang einzuleiten wird an den Steueranschluss 11 während einer Messphase, die hinreichend kurz gegenüber der Ruhephase ist, eine Spannung angelegt, durch die bewirkt wird, dass die Potenziale, die am Drainanschluss 19, am Sourceanschluss 20 und am Substratanschluss 6 liegen, direkt am Feldeffekttransistor 30 stehen und der gewünschte Strom, der der Messgröße entspricht, fließt. Am Ende der Messphase wird über ein entsprechendes Anlegen einer ausreichend großen Spannung am Steueranschluss 11 wieder die Ruhephase eingeleitet, dadurch, dass die Spannung wieder größer gewählt wird, werden die oben erwähnten Anschlüsse wieder alle auf Massepotenzial 40 gezogen.

Im Betrieb des Halbleitersensors werden die Mess- und Ruhephasen dann beliebig oft wiederholt.

Mit der erfindungsgemäßen Ansteuerung des Halbleitersensors ist Sorge getragen, dass der Feldeffekttransistor 30 immer in seinem gewünschten Arbeitspunkt arbeiten kann und kein Wegdriften erfolgt.

Wenn oben ausgeführt wurde, dass das sensitive Gate 1 und der Guardring 8 an das Substrat 9 dauerhaft über eine elektrische Verbindung angeschlossen sind, so ist es in einer alternativen Ausführungsform auch möglich, diese beiden Anschlüsse 1 und 8 ebenfalls in den Ruhephasen an das Massepotenzial zu schalten.

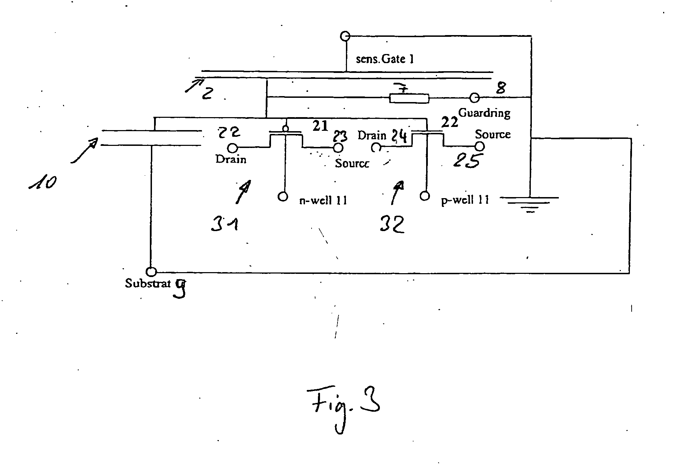

In Figur 3 ist ein weiteres Ausführungsbeispiel eines erfindungsgemäßen Halbleitersensors dargestellt. Im Unterschied zum Ausführungsbeispiel von Figur 2 finden zwei Feldeffekttransistoren 31 und 32 gegensätzlicher Dotierung als Lesetransistoren Anwendung. Die bereits bekannten Bezugszeichen bezeichnen die bereits bekannten Teile.

Ein p-Kanal-Feldeffekttransistor 31 ist mit seinem Gateanschluss 21 an die Gegenelektrode 2 angeschlossen. Der zweite n-Kanal-Feldeffekttransistor 32 ist mit seinem Gateanschluss 22 ebenfalls an die Gegenelektrode 2 angeschlossen. Beide Feldeffekttransistoren 31 und 32 verfügen wiederum über Drainanschlüsse 22 bzw. 24 und Sourceanschlüsse 23 bzw. 25.

Dieser Halbleitersensor kann grundsätzlich auch mit Mess- und Ruhephasen betrieben werden. In der Ruhephase sind wieder alle Potenziale auf Massepotenzial gelegt. Dies kann durch eine ähnliche Ansteuereinrichtung wie in Figur 2 dargestellt erfolgen. Die in Figur 2 erläuterte Messphase ist in diesem Ausführungsbeispiel von Figur 3 jedoch in zwei Teilphasen unterteilt. In der ersten Teilmessphase werden die Potenziale, wie oben beschrieben, an den p-Kanal-Feldeffekttransistor 31 angelegt und in einer zweiten Messphase die gleichen Potenziale, jedoch mit umgekehrten Vorzeichen, an den n-Kanal-Feldeffekttransistor 32. Dies hat den Vorteil, dass die Summe der angelegten Potenziale über die Zeit integriert gleich Null ist und ein Driften der beiden Transistoren 31 und 32 somit vermieden werden kann. Der Wert dieser Potenziale mit entgegengesetzten Polaritäten orientiert sich vorzugsweise an den Geometrien der Transistoren. Bevorzugt ist die kapazitive Beeinflussung des Gates 1 durch den Transistor 31 dem Betrag nach gleich der kapazitiven Beeinflussung des Gates 1 durch den Transistor 32.

Eine andere Variante für den Betrieb dieser in Figur 3 dargestellten Schaltungsanordnung besteht darin, dass nicht zwischen Ruhe- und Messphasen unterschieden wird und demzufolge auch keine Ansteuerschaltung zum Einleiten der Ruhephasen vorgesehen ist. Der Halbleitersensor von Figur 3 kann nämlich auch so betrieben werden, dass dieser ständig messbereit ist. Ein Wegdriften des Arbeitspunktes wird allein dadurch vermieden, dass zwei zueinander komplementäre FETs 31 und 32 parallel mit ihren Gateelektroden 21 und 22 an das sensitive Gate 1 gekoppelt sind. Durch die Komplemetarität der Anordnung befindet sich der mit den Gateelektroden 21 und 22 liegende Schaltungsknoten immer auf gleichem Potenzial, was gewollt ist, um das Wegdriften des Arbeitspunktes der Anordnung zu vermeiden.

In Figur 3 sind der besseren Übersichtlichkeit wegen die weiteren möglichen Transistoren zum Schalten der einzelnen Signale in der Messphase nicht eingezeichnet. Es sind hier beliebige Möglichkeiten gegeben, während der Messphase die gewünschten Potenziale anzulegen. Erfindungsgemäß ist lediglich entscheidend, dass in den Ruhephasen alle Potenziale auf einen vorgegebenen Potenzial, zum Beispiel dem Massepotenzial, liegen und nur in einer Messphase die gewünschten Arbeitspotenziale anliegen, wobei die Messphase vorzugsweise hinreichend klein gegenüber den Ruhephasen gewählt ist. Beispielsweise beträgt das Verhältnis von Messzeit zu Ruhezeit 1:10, 1:100 oder 1:1000.

In den vorgenannten Ausführungsbeispielen wurde allgemein von einem sensitiven Gate 1 gesprochen. Ein solches sensitives Gate 1 kann auf unterschiedliche Art und Weise realisiert werden. Eine Möglichkeit besteht z.B. darin, dass eine Flüssigkeit und eine darunter befindliche Kanalisolierung vorgesehen ist. Die Kanalisolierung liegt auf einer Gegenelektrode, welche mit der Gateelektrode des oder der Feldeffekttransistoren verbunden ist. Eine andere Variante sieht vor, dass die Kanalisolierung durch einen Luftspalt gebildet ist und darüber eine sensitive Elektrode angeordnet ist. Entscheidend ist immer, dass dieser sensitive Teil des Halbleitersensors an den Gateanschluss des oder der FETs gekoppelt ist, um die Konzentration des zu detektierenden bzw. zu messenden Ions/Gases auswerten zu können.

### Bezugszeichenliste

- 1: Sensitives Gate
- 2: Gegenelektrode
- 3: Gateanschluss
- 4: Drainanschluss
- 5: Sourceanschluss
- 6: Substratanschluss
- 7: Oberflächenwiderstand
- 8: Guardring
- 9: Halbleitersubstrat
- 11: Steueranschluss
- 12,13,14,15,16: Schalttransistor
- 17,18: Entkopplungstransistoren
- 19,20: Anschlüsse
- 21,22: Gateanschlüsse
- 23,25: Drainanschlüsse
- 24,26: Sourceanschlüsse
- 30: Feldeffekttransistor
- 31: p-Kanal-FET
- 32: n-Kanal-FET

- 50: Ansteuereinrichtung

## Patentansprüche

1. Halbleitersensor mit mindestens einem in ein Halbleitersubstrat eingebetteten Feldeffekttransistor (30) mit einem Gateanschluss(3), einem Drainanschluss (4), einem Sourceanschluss (5) und einem Substratanschluss (6), wobei an den Gateanschluss (3) ein Guardring (8) und ein sensitives Gate (1) gekoppelt sind,
**gekennzeichnet durch** eine Ansteuereinrichtung (50), eingerichtet zur wiederholten Schaltung des Halbleitersensors aus einer Messphase in eine Ruhephase, innerhalb der der Drainanschluss (4), der Sourceanschluss (5) und der Substratanschluss (6) des Feldeffekttransistors (30) auf gleiches Potenzial gelegt sind, wobei in der Ruhephase eine ausreichend große Spannung an den Steueranschluss (11) der Ansteuereinrichtung (50) angelegt ist.

2. Halbleitersensor nach Anspruch 1,
**dadurch gekennzeichnet, dass** die Ansteuereinrichtung (50) auch das sensitive Gate (1) und den Guardring (8) auf dieses gleiche Potenzial schaltet.

3. Halbleitersensor nach Anspruch 1 oder 2,
**dadurch gekennzeichnet, dass** das sensitive Gate (1) und der Guardring (8) mit dem Halbleitersubstrat (9) elektrisch verbunden sind.

4. Halbleitersensor nach einem der Ansprüche 1 bis 3,
**dadurch gekennzeichnet, dass** das gleiche Potenzial das Massepotenzial (40) ist.

5. Halbleitersensor nach einem der Ansprüche 1 bis 4,
**dadurch gekennzeichnet, dass** der Guardring (8) über einen Oberflächenwiderstand (7) an den Gateanschluss (3) des Feldeffekttransistors (30) angeschlossen ist.

6. Halbleitersensor nach einem der Ansprüche 1 bis 5,
**dadurch gekennzeichnet, dass** das sensitive Gate (1) beabstandet zu einer Gegenelektrode (2) angeordnet ist, welche an den Gateanschluss (3) des Feldeffekttransistors (30) angeschlossen ist.

7. Halbleitersensor nach einem der Ansprüche 1 bis 6,
**dadurch gekennzeichnet, dass** der Drainanschluss (4) und der Sourceanschluss (5) des Feldeffekttransistors (30) über Schalttransistoren (12, 13) durch Anlegen einer Steuererspannung an diese Schalttransistoren (12, 13) auf das vorgegebene Potenzial schaltbar sind.

8. Halbleitersensor nach einem der Ansprüche 1 bis 7,
**dadurch gekennzeichnet, dass** der Drainanschluss (4) und der Sourceanschluss (5) des Feldeffekttransistors (30) über Entkopplungstransistoren (17, 18) von Anschlüssen (19, 20) entkoppelbar sind.

9. Halbleitersensor nach Anspruch 8,
**dadurch gekennzeichnet, dass** die Steueranschlüsse der Entkoppeltransistoren (17, 18) mit dem Substratanschluss (6) des Feldeffekttransistors (30) verbunden und über weitere Schalttransistoren (14, 16) an Bezugspotenzial schaltbar sind.

10. Halbleitersensor nach einem der Ansprüche 1 bis 9,
**dadurch gekennzeichnet, dass** dieser durch die Ansteuereinrichtung (50) alternierend zwischen Ruhephasen und Messphasen umschaltbar ist.

11. Halbleitersensor nach einem der Ansprüche 1 bis 10,
**dadurch gekennzeichnet, dass** die durch die Ansteuereinrichtung (50) initiierten Messphasen kürzer als die Ruhephasen eingestellt sind.

12. Halbleitersensor nach Anspruch 11,
**dadurch gekennzeichnet, dass** das Verhältnis von Messzeit zu Ruhezeit 1:10, 1:100 oder 1:1000 beträgt.

13. Halbleitersensor nach einem der Ansprüche 1 bis 12,
**dadurch gekennzeichnet, dass** dieser zwei entgegengesetzt zueinander dotierte Feldeffekttransistoren (31, 32) aufweist, die mit ihren Gateanschlüssen (21, 22) an die Sensorelektrode (1) gekoppelt sind, und dass die Ansteuereinrichtung (50) dafür sorgt, dass die Messphase in zwei Teilmessphasen eingeteilt ist, wobei in der ersten Teilmessphase die Arbeitspotenziale an die Anschlüsse des einen Feldeffekttransistors (31) und in der zweiten Teilmessphase die Arbeitspotenziale an den anderen Feldeffekttransistors (32) anlegbar sind.

14. Halbleitersensor nach dem Oberbegriff des Anspruchs 1,
**dadurch gekennzeichnet, dass** dieser zwei entgegengesetzt zueinander dotierte Feldeffekttransistoren (31, 32) aufweist, die mit ihren Gateanschlüssen (21, 22) an die Sensorelektrode (1) gekoppelt sind.

15. Halbleitersensor nach Anspruch 14,
**dadurch gekennzeichnet, dass** in den Messphasen an die Transistoren (31, 32) Potenziale mit entgegengesetzten Polaritäten angelegt werden.

16. Halbleitersensor nach Anspruch 14 oder 15,
**dadurch gekennzeichnet, dass** in den Messphasen an die Transistoren (31, 32) Potenziale mit entgegengesetzten Polaritäten angelegt werden und der Wert dieser Potenziale sich an den Geometrien der Transistoren (31, 32) dahingehend orientiert, dass die kapazitive Beeinflussung des Gates (1) durch den Transistor (31) dem Betrag nach gleich der kapazitiven Beeinflussung des Gates (1) durch den Transistor (32) ist.

17. Verfahren zum Ansteuern eines Halbleitersensors nach einem der Ansprüche 1 bis 13,
**dadurch gekennzeichnet, dass** der Halbleitersensor aus einer Messphase in eine Ruhephase, innerhalb der Anschlüsse des Feldeffekttransistors (30) auf gleiches Potenzial gelegt sind, wiederholt geschaltet wird.

18. Verfahren nach Anspruch 17,
**dadurch gekennzeichnet, dass** in den Ruhephasen mindestens der Sourceanschluss (5), der Drainanschluss (4) und der Substratanschluss (6) des Feldeffekttransistors (30) auf das vorgegebene Potenzial geschaltet werden.

19. Verfahren nach Anspruch 18,
**dadurch gekennzeichnet, dass** das vorgegebene Potenzial das Massepotenzial (40) des Halbleitersensors ist.

## Claims

1. A semiconductor sensor, having at least one field-effect transistor (30) embedded in a semiconductor substrate and having a gate terminal (3), a drain terminal (4), a source terminal (5) and a substrate terminal (6), with a guard ring (8) and a sensitive gate (1) being coupled to the gate terminal (3),
**characterised by** a control device (50), set up for the repeated switching of the semiconductor sensor from a measuring phase to an idle phase, within which the drain terminal (4), the source terminal (5) and the substrate terminal (6) are set at the same potential, in the idle phase a sufficiently high voltage being applied to the control terminal (11) of the control device (50).

2. A semiconductor sensor according to Claim 1,
**characterised in that** the control device (50) also switches the sensitive gate (1) and the guard ring (8) to this same potential.

3. A semiconductor sensor according to Claim 1 or 2,
**characterised in that** the sensitive gate (1) and the guard ring (8) are electrically connected to the semiconductor substrate (9).

4. A semiconductor sensor according to one of Claims 1 to 3,
**characterised in that** the same potential is the earth potential (40).

5. A semiconductor sensor according to one of Claims 1 to 4,
**characterised in that** the guard ring (8) is connected through a surface resistor (7) to the gate terminal (3) of the field-effect transistor (30).

6. A semiconductor sensor according to one of Claims 1 to 5,
**characterised in that** the sensitive gate (1) is located spaced from a counter-electrode (2) which is connected to the gate terminal (3) of the field-effect transistor (30).

7. A semiconductor sensor according to one of Claims 1 to 6,
**characterised in that** the drain terminal (4) and the source terminal (5) of the field-effect transistor (30) are switchable to the predetermined potential by switching transistors (12, 13) by the application of a control voltage to these switching transistors (12, 13).

8. A semiconductor sensor according to Claims 1 to 7,
**characterised in that** drain terminal (4) and the source terminal (5) of the field-effect transistor (30) can be decoupled from terminals (19, 20) by decoupling transistors (17, 18).

9. A semiconductor sensor according to Claim 8,
**characterised in that** the control terminals of the decoupling transistors (17, 18) are connected to the substrate terminal (6) of the field-effect transistor (30) and are switchable to reference potential by additional switching transistors (14, 16).

10. A semiconductor according to one of Claims 1 to 9,
**characterised in that** this sensor can be alternately switched between idle phases and measuring phases by the control device (50).

11. A semiconductor sensor according to one of Claims 1 to 10,
**characterised in that** the measuring phases imitated by the control device (50) are adjusted to be shorter than the idle phases.

12. A semiconductor sensor according to Claim 11,
**characterised in that** the ratio of the measurement time to the idle time is 1:10, 1:100 or 1:1000.

13. A semiconductor sensor according to one of Claims 1 to 12,
**characterised in that** this sensor comprises two oppositely doped field-effect transistors (31, 32), which are coupled by their gate terminals (21, 22) to the sensor electrode (1),
and **in that** the control device (50) ensures that the measuring phase is divided into two partial measuring phases, whereby in the first partial measuring phase the operating potentials can be applied to the terminals of the first field-effect transistor (31), and in the second partial measuring phase the operating potentials can be applied to the second field-effect transistor (32).

14. A semiconductor sensor according to the precharacterising clause of Claim 1,
**characterised in that** this sensor comprises two oppositely doped field-effect transistors (31, 32) that are coupled by their gate terminals (21, 22) to the sensor electrode (1).

15. A semiconductor sensor according to Claim 14,
**characterised in that** during the measuring phases potentials having opposite polarities are applied to the transistors (31, 32).

16. A semiconductor sensor according to Claim 14 or 15,
**characterised in that** during the measuring phases potentials of opposite polarities are applied to the transistors (31, 32), and the value of these potentials is based on the geometries of the transistors (31, 32) such that the capacitive control of gate (1) by the transistor (31) is at a value equal to the capacitive control of gate (1) by the transistor (32).

17. A method for controlling a semiconductor sensor according to one of Claims 1 to 13,
**characterised in that** the semiconductor sensor is repeatedly switched from a measuring phase into an idle phase inside which terminals of the field-effect transistor (30) are set at the same potential.

18. A method according to Claim 17,
**characterised in that** in the idle phases at least the source terminal (5), the drain terminal (4) and the substrate terminal (6) of the field-effect transistor (30) are switched to the predetermined potential.

19. A method according to Claim 18,
**characterised in that** the predetermined potential is the earth potential (40) of the semiconductor sensor.

## Revendications

1. Capteur à semi-conducteur comportant au moins un transistor à effet de champ (30) intégré dans un substrat semi-conducteur, ayant une borne de porte (3), une borne de drain (4), une borne de source (5) ainsi qu'une borne de substrat (6),
la borne de porte (3) étant couplée à un anneau de garde (8) et à une porte sensible (1),
**caractérisé par**
une installation de commande (50) conçue pour commuter de manière répétée le capteur à semi-conducteur à partir d'une phase de mesure vers une phase de repos au cours de laquelle la borne de drain (4), la borne de source (5) et la borne de substrat (6) du transistor à effet de champ (30) sont mis au même potentiel, et
une tension suffisamment grande est appliquée à la borne de commande (11) de l'installation de commande (50) pendant la phase de repos.

2. Capteur à semi-conducteur selon la revendication 1,
**caractérisé en ce que**
l'installation de commande (50) commute la porte sensible (1) et l'anneau de garde (8) sur ce même potentiel.

3. Capteur à semi-conducteur selon la revendication 1 ou 2,
**caractérisé en ce que**
la porte sensible (1) et l'anneau de garde (8) sont reliés électriquement au substrat semi-conducteur (9).

4. Capteur à semi-conducteur selon l'une des revendications 1 à 3,
**caractérisé en ce que**
le même potentiel est le potentiel de masse (40).

5. Capteur à semi-conducteur selon l'une des revendications 1 à 4, **caractérisé en ce que**
l'anneau de garde (8) est relié par l'intermédiaire d'une résistance surfacique (7) à la borne de porte (3) du transistor à effet de champ (30).

6. Capteur à semi-conducteur selon l'une des revendications 1 à 5,
**caractérisé en ce que**
la porte sensible (1) est écartée d'une contre-électrode (2) elle-même reliée à la borne de porte (3) du transistor à effet de champ (30).

7. Capteur à semi-conducteur selon l'une des revendications 1 à 6,
**caractérisé en ce que**
la borne de drain (4) et la borne de source (5) du transistor à effet de champ (30) sont commutées sur le potentiel prédéfini par l'intermédiaire de transistors de commutation (12, 13) auxquels est appliquée une tension de commande.

8. Capteur à semi-conducteur selon l'une des revendications 1 à 7,
**caractérisé en ce que**
la borne de drain (4) et la borne de source (5) du transistor à effet de champ (30), sont découplées des bornes (19, 20) par des transistors de découplage (17, 18).

9. Capteur à semi-conducteur selon la revendication 8,
**caractérisé en ce que**
les bornes de commande des transistors de découplage (17, 18) sont reliées à la borne de substrat (6) du transistor à effet de champ (30), et au potentiel de référence par l'intermédiaire d'autres transistors de commutation (14, 16).

10. Capteur à semi-conducteur selon l'une des revendications 1 à 9,
**caractérisé en ce qu'**
il est commuté en alternance entre les phases de repos et les phases de mesure par l'installation de commande (50).

11. Capteur à semi-conducteur selon l'une des revendications 1 à 10,
**caractérisé en ce que**
les phases de mesure lancées par l'installation de commande (50) sont plus courtes que les phases de repos.

12. Capteur à semi-conducteur selon la revendication 11,
**caractérisé en ce que**
le rapport entre la durée de mesure et la durée de repos, est de 1:10, 1:100 ou 1:1000.

13. Capteur à semi-conducteur selon l'une des revendications 1 à 12,
**caractérisé en ce qu'**
il comporte deux transistors à effet de champ (31, 32) à dopage opposé, dont les bornes de porte (21, 22) sont couplées à l'électrode de capteur (1), et
l'installation de commande (50) divise la phase de mesure en deux phases partielles de mesure, et
dans la première phase partielle de mesure, les potentiels de travail sont appliqués aux bornes de l'un des transistors à effet de champ (31) et dans la seconde phase partielle de mesure, les potentiels de travail sont appliqués à l'autre transistor à effet de champ (32).

14. Capteur à semi-conducteur selon le préambule de la revendication 1,
**caractérisé en ce qu'**
il comporte deux transistors à effet de champ (31, 32) à dopage opposé, et dont les bornes de porte (21, 22) sont reliées à l'électrode de capteur (1).

15. Capteur à semi-conducteur selon la revendication 14,
**caractérisé en ce que**
dans les phases de mesure, les transistors (31, 32) reçoivent des potentiels de polarité opposée.

16. Capteur à semi-conducteur selon la revendication 14 ou 15,
**caractérisé en ce que**
dans les phases de mesure, les transistors (31, 32) reçoivent des potentiels de polarité opposée et l'amplitude de ces potentiels dépend de la géométrie des transistors (31, 32) de façon que l'influence capacitive de la porte (1) par le transistor (31) soit égale en amplitude à l'influence capacitive de la porte (1) par le transistor (32).

17. Procédé de commande d'un capteur à semi-conducteur selon l'une des revendications 1 à 13,
**caractérisé en ce que**
le capteur à semi-conducteur est commuté de manière répétée à partir d'une phase de mesure dans une phase de repos au cours de laquelle les bornes du transistor à effet de champ (30) sont mises au même potentiel.

18. Procédé de commande d'un capteur à semi-conducteur selon la revendication 17,
**caractérisé en ce que**
les phases de repos, au moins la borne de source (5), la borne de drain (4) et la borne de substrat (6) du transistor à effet de champ (30), sont mises au potentiel prédéfini.

19. Procédé de commande d'un capteur à semi-conducteur selon la revendication 18,
**caractérisé en ce que**
le potentiel prédéfini est le potentiel de masse (40) du capteur à semi-conducteur.
